Europäisches Patentamt

European Patent Office

Office européen des brevets

(19)

(11) Veröffentlichungsnummer: **0 037 091**
**B1**

(12) **EUROPÄISCHE PATENTSCHRIFT**

(45) Veröffentlichungstag der Patentschrift:
23.11.83

(21) Anmeldenummer: 81102305.0

(22) Anmeldetag: **26.03.81**

(51) Int. Cl.³: **F 16 B 13/04**

(54) Kunststoffdübel.

(30) Priorität: **28.03.80 DE 3012177**

(43) Veröffentlichungstag der Anmeldung:
**07.10.81 Patentblatt 81/40**

(45) Bekanntmachung des Hinweises auf die Patenterteilung:
**23.11.83 Patentblatt 83/47**

(84) Benannte Vertragsstaaten:
**AT BE CH FR GB IT LI LU NL SE**

(56) Entgegenhaltungen:
**GB - A - 1 389 524**
**GB - A - 1 417 537**
**GB - A - 2 018 928**
**US - A - 1 881 973**
**US - A - 2 762 252**
**US - A - 2 913 953**
**US - A - 3 398 627**

(73) Patentinhaber: **Tox-Dübel-Werk Richard W. Heckhausen KG, D-7762 Bodman-Ludwigshafen 1 (DE)**

(72) Erfinder: **Riedel, Josef, Hutbühlstrasse 6,
D-7770 Überlingen 12 (DE)**

(74) Vertreter: **Wallach, Curt, Dipl.-Ing. Patentanwälte
Dipl.-Ing. C.Wallach et al, Dipl.-Ing. G. Koch
Dr.T.Haibach Dipl.-Ing. R. Feldkamp Kaufingerstrasse 8,
D-8000 München 2 (DE)**

## Kunststoffdübel

Die Erfindung betrifft einen Kunststoffdübel der im Oberbegriff des Anspruchs 1 angegebenen Gattung. Derartige Dübel sind beispielsweise aus der DE-PS Nr. 2254602 und der DE-OS Nr. 2901066 bekannt. Derartige Dübel weisen den Vorteil auf, dass sie sowohl als normale Spreizdübel in zylindrischen Bohrlöchern eingesetzt werden können, aber ebenso als Knickdübel zur Befestigung in Hohlsteinen oder an dünnen Platten od. dgl. Bei derartigen Dübeln, ebenso wie bei allen anderen, nur auf die Knickfunktion abgestimmten Dübeln verhindern die durch die axiale Verspannung seitlich in den Hohlraum ausknickenden Dübelsegmente ein Herausfallen aus dem Loch, welches den Kopfteil des Dübels und möglicherweise auch einen oberen Abschnitt der Spreizsegmente umschliesst. Je weiter der Dübelfuss über das eingeschnittene Muttergewinde von der Schraube nach dem Dübelkopf hin gezogen wird, desto grösser wird die Haltekraft.

Bei den bisher bekannten Knickdübeln war die Möglichkeit der axialen Verspannung begrenzt, und beim Überschreiten eines vorbestimmten Drehmomentes beim Anziehen der Befestigungsschraube erfolgte ein Durchdrehen der Schraube innerhalb des Muttergewindes, d.h. die Schraube wurde nicht mehr vom Muttergewinde geführt und drehte durch.

Der Erfindung liegt die Erkenntnis zugrunde, dass dieses Durchdrehen der Schraube dadurch verursacht und begünstigt wurde, dass beim radialen Aufspreizen der Dübelsegmente die Dübelfusshülse im oberen Abschnitt, d.h. dort wo die Dübelsegmente ansetzen, ebenfalls radial nach aussen aufgeweitet wurde, weil die ausknickenden Dübelsegmente, veranlasst durch die axiale Verspannung, durch die Umknickung den Hülsenring des Dübelfusses trichterartig aufweiten. Dies bedeutet, dass im oberen Abschnitt das Muttergewinde von der Schraube abgehoben wird und die Schraube nur noch im unteren Abschnitt des Dübelfusses von einen oder wenigen Gewindegängen voll erfasst ist, so dass sie begünstigt durch das elastisch zurückweichende Dübelmaterial durchrutschen oder ausreissen konnte.

Der Erfindung liegt daher die Aufgabe zugrunde, einen Kunststoffdübel mit seitlich ausknickbaren Dübelsegmenten derart zu verbessern, dass der Gewindeeingriff zwischen der Befestigungsschraube und dem selbst eingeschnittenen Gewinde am Dübelfuss bei der axialen Verspannung erhalten bleibt.

Gelöst wird die gestellte Aufgabe durch die im Kennzeichnungsteil des Anspruchs 1 angegebenen Merkmale.

Durch die Erfindung wird erreicht, dass beim Ausknicken der Dübelsegmente über die gebildeten Gelenke ein Aufspreizen erfolgen kann, ohne dass dabei eine Radialkraft auf die Dübelfusshülse ausgeübt wird. Trotz dieser Gelenkausbildung, die einen Kraftfluss in die Dübelfusshülse hinein verhindert, wird die axiale Verspannung in keiner Weise beeinträchtigt, und durch den fortdauernden Gewindeeingriff kann erreicht werden, dass der Dübelfuss sehr weit auf den Dübelkopf hin verspannt wird, und die Spreizsegmente eine optimale Stützkraft ausüben, wodurch der Auszugswiderstand beträchtlich vergrössert wird.

Weitere zweckmässige Ausgestaltungen der Erfindung ergeben sich aus den Unteransprüchen.

Nachstehend werden Beispiele der Erfindung anhand der Zeichnung beschrieben. In der Zeichnung zeigen:

Fig. 1 eine perspektivische Ansicht eines erfindungsgemäss ausgebildeten Dübels mit schuppenartigen Spreizsegmenten;

Fig. 2 einen Axialschnitt des in Fig. 1 dargestellten Dübels;

Fig. 3 einen Halbschnitt eines Dübels in einer anderen Ausführungsform;

Fig. 4 bis 6 Teilansichten von erfindungsgemäss ausgebildeten Dübeln mit unterschiedlich ausgebildeten Gelenkschwächungslinien;

Fig. 7 einen den Stand der Technik repräsentierenden Knickdübel in ausgeknickter Stellung, und

Fig. 8 eine der Fig. 7 entsprechende Ansicht eines ausgeknickten, erfindungsgemäss ausgebildeten Dübels.

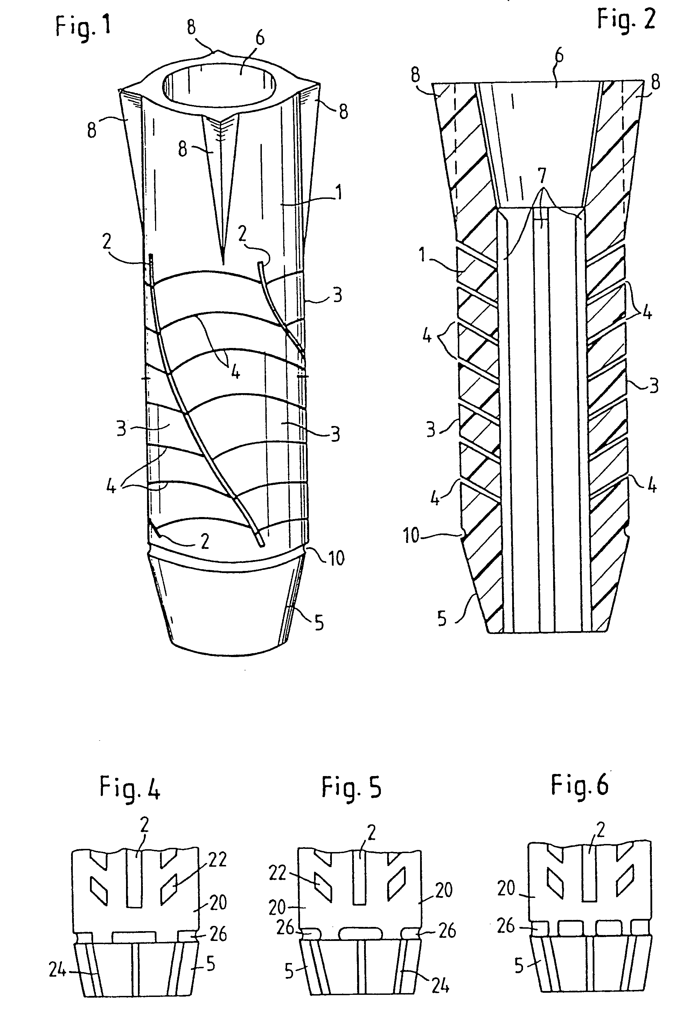

Der in Fig. 1 und 2 dargestellte Dübel weist einen hülsenartigen geschlossenen Kopfteil 1 und durch Schlitze 2 gebildete Dübelsegmente 3 auf, an die ein Dübelfuss 5 in Form eines geschlossenen Hülsenringes anschliesst. Die Schlitze 2 verlaufen gemäss dem Ausführungsbeispiel schraubenlinienförmig, so dass auch die Dübelsegmente 3 schraubenlinienförmig verlaufen. Gemäss dem dargestellten Ausführungsbeispiel sind die Segmente durch querverlaufende Einschnitte 4 in einzelne Schuppen unterteilt, die sich beim Verspannen übereinanderschieben können. Der Dübel weist ein Schraubeneinsatzloch 6 auf, welches im Kopfteil 1 konisch ausgebildet ist und im übrigen Teil bis zum Dübelfuss 5 hin zylindrisch verläuft. Axial verlaufende Längsstege 7 auf der Innenseite des Dübelmantels halten die einzelnen Schuppen der Dübelsegmente zusammen. Auf der Aussenseite ist das Kopfteil 1 mit Drehsicherungen in Gestalt von axial auslaufenden Rippen 8 versehen. In den Hülsenring des Dübelfusses 5 schneidet sich die Einsatzschraube ihr Gewinde und bewirkt eine axiale Verspannung. Um dabei ein Aufweiten des Ringes beim Ausknicken der Dübelsegmente zu vermeiden, ist erfindungsgemäss am Übergang zwischen Dübelfuss und Dübelsegmenten eine Schwächungslinie in Gestalt einer ringsum laufenden Nut 10 vorgesehen.

Das in Fig. 3 dargestellte Ausführungsbeispiel entspricht dem Ausführungsbeispiel nach Fig. 1 und 2 mit dem Unterschied, dass hierbei die Längsschlitze 12 in axialer Richtung verlaufen, und nicht auf Schraubenlinien. Der Dübelmantel ist durch vier derartige Achsparallele zwischen Kopfteil 1 und Dübelfuss 5 verlaufende Längsschlitze 12 in vier Spreizsegmente 11 unterteilt. Diese weisen schräg verlaufende Einschnitte 14 auf, die vom Dübelmantel her eingeschnitten bzw. eingeformt sind und die Schuppen 13 der Spreizsegmente 11 bilden. Der Zusammenhalt erfolgt durch den von den Einschnitten 14 nicht getroffenen Querschnitt der Spreizsegmente 11. Die Schrägstellung der Einschnitte 14 benachbarter Spreizsegmente 11 ist entgegengesetzt gerichtet, so dass die Einschnitte 14 an den Längsschlitzen 12 V-förmig zusammenlaufen, und zwar abwechselnd mit nach dem Kopfteil 1 bzw. dem Dübelfuss 5 hin gerichteten Scheitel. Innen weisen die Spreizsegmente 11 eine der Schraubenführung dienende Rille 16 auf. Jede Schuppe 13 trägt aussen einen Vorsprung in Gestalt eines Sägezahns 15, die durch Einkrallen in der Bohrlochwandung den Ausziehwiderstand weiter erhöhen. Auch hier ist zwischen Dübelfuss 5 und den Spreizsegmenten 11 eine ringsum laufende Nut 10 angeordnet, die das Gelenk bildet.

Die Erfindung ist nicht auf die in Fig. 1 bis 3 dargestellte Dübelausbildung mit schuppenartigen Segmenten beschränkt, sondern sie kann bei allen Dübeln Anwendung finden, welche Spreizsegmente aufweisen, die beim Einsetzen in einen Hohlstein oder hinter einer Platte bei der axialen Verspannung seitlich ausknicken. Bei den Ausführungsbeispielen gemäss Fig. 4 bis 6 sind derartige Spreizsegmente 20 vorgesehen, die durch die Schlitze 2 getrennt sind und aussen Stützelemente 22 tragen. Der Dübelfuss 5 ist konisch ausgebildet und mit längs der Mantellinie verlaufenden Rippen 24 versehen. Das Loch der Dübelfusshülse 5, in den sich die Schraube einschneidet, kann kreisrund sein, wie dies an sich üblich ist. Gemäss einer zweckmässigen Ausgestaltung der Erfindung besitzt dieses Loch jedoch einen kreuzförmigen Querschnitt (aus der Zeichnung nicht ersichtlich), wodurch der Eindrehwiderstand beim Einschneiden des Gewindes verringert wird, jedoch ein optimaler und dauerhafter Gewindeeingriff gewährleistet wird. Bei sämtlichen Ausführungsbeispielen ist zwischen Dübelfuss 5 und Spreizsegment 20 eine Schwächungslinie vorgesehen. Diese besteht gemäss dem Ausführungsbeispiel nach Fig. 4 aus über Umfangsbogenabschnitte verlaufenden Einschnitten oder Schlitzen 26, die durchgehend ausgebildet sein können oder auch nur bis zu einer gewissen Tiefe geführt sind. Eine etwas andere Ausführungsform der Schlitze 26 zeigt Fig. 5. In diesem Falle sind sie mit abgerundeten Enden versehen, während sie bei dem Ausführungsbeispiel nach Fig. 4 rechteckig ausgebildet sind. Bei dem Ausführungsbeispiel nach Fig. 6 sind die Einschnitte bzw. Schlitze 26 ebenfalls rechteckig ausgebildet und besitzen eine etwas grössere Höhe als bei den Ausführungsbeispielen nach Fig. 4 und 5.

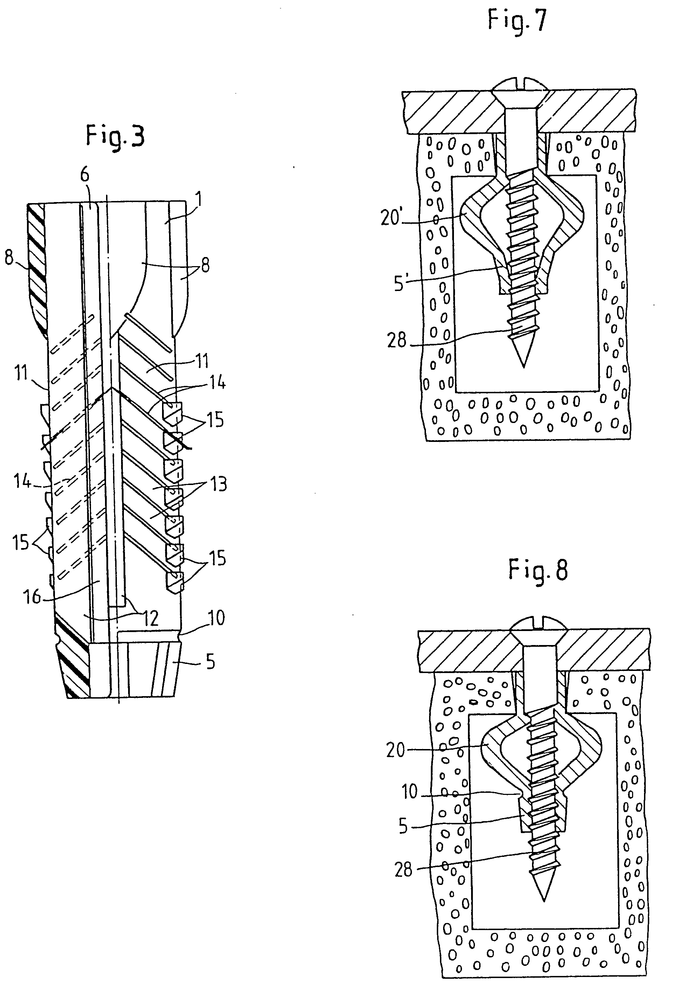

Fig. 7 zeigt in einer schematischen Darstellung einen den Stand der Technik repräsentierenden Knickdübel, der innerhalb eines Hohlsteins aufgespreizt ist. Diese Aufspreizung erfolgt dadurch, dass sich die Schraube 28 in die Ringhülse des Dübelfusses 5' ihr Gewinde einschneidet und beim Weiterdrehen eine axiale Anspannung bewirkt, die ein Ausknicken der Spreizsegmente bzw. der Knicksegmente 20' bewirkt. Durch diese radial nach aussen gerichteten Knickkräfte ziehen die Spreizsegmente an dem oberen Hülsenteil des Dübelfusses, so dass dieser Abschnitt sich aufweitet und die Schraube nur noch über den unteren Teil eingreift und daher die Gefahr eines Durchrutschens besteht. Diese Gefahr ist bei dem erfindungsgemässen Dübel nicht gegeben, wie dies aus Fig. 5 eindeutig hervorgeht. Durch die Schwächungslinien 10 können sich die Spreizsegmente 20 gelenkartig nach aussen abspreizen, ohne einen radialen Zug auf den oberen Abschnitt des Dübelfussringes auszuüben. Durch weiteres Einschrauben werden demgemäss die Dübelsegmente immer weiter nach aussen gespreizt, ohne dass eine Aufweitung der das eingeschnittene Gewinde aufweisenden Dübelfusshülse erfolgt. Dies wiederum hat zur Folge, dass der Dübelfuss axial immer weiter verspannt werden kann, weil das eingeschnittene Gewinde im Dübelfuss über die gesamte axiale Länge mit dem Gewinde der eingedrehten Schraube in Eingriff steht, so dass ein Durchrutschen verhindert ist. Auf diese Weise kann eine viel stärkere Haltekraft ausgeübt werden als bei den den Stand der Technik bildenden Dübeln, wie dies aus einem Vergleich der Fig. 7 und 8 deutlich ersichtlich ist.

## Patentansprüche

1. Kunststoffdübel, dessen Mantel durch Längsschlitze (2, 12), die zwischen dem geschlossenen Dübelkopf (1) und dem geschlossenen Dübelfuss (5) verlaufen, in Knicksegmente und/oder Spreizsegmente (3, 11, 20) aufgeteilt ist, und dessen geschlossener Fuss (5) einen massiven Hülsenring bildet, in dem sich die eingeschraubte Befestigungsschraube (28) ihr Muttergewinde selbst einschneidend herstellt und dadurch eine axiale Verspannung des Dübels ermöglicht, dadurch gekennzeichnet, dass im Übergangsbereich zwischen dem Hülsenring des Dübelfusses (5) und den Dübelsegmenten (3, 11, 20) in Umfangsrichtung verlaufend Schwächungslinien (10, 26) eingeformt sind, die ein Schwenkgelenk für die Dübelsegmente bilden.

2. Kunststoffdübel nach Anspruch 1, dadurch gekennzeichnet, dass die Schwächungslinien (10, 26) unmittelbar über dem geschlossenen Ring des Dübelfusses (5) angeordnet sind, und die Längsschlitze (2, 12) in diese Schwächungslinien münden.

3. Kunststoffdübel nach Anspruch 1, dadurch gekennzeichnet, dass die die Segmente bildenden Längsschlitze (2, 12) in einem geringen Abstand vor den Schwächungslinien (10, 26) münden.

4. Kunststoffdübel nach einem der Ansprüche 1 bis 3, dadurch gekennzeichnet, dass die das Gelenk bildende Schwächungslinie von einer Ringnut (10) gebildet ist.

5. Kunststoffdübel nach Anspruch 4, dadurch gekennzeichnet, dass die Ringnut (10) innen und/oder aussen verlaufend angeordnet ist.

6. Kunststoffdübel nach einem der Ansprüche 1 bis 3, dadurch gekennzeichnet, dass die Schwächungslinie durch eine Perforation (26) gebildet ist.

7. Kunststoffdübel nach Anspruch 6, dadurch gekennzeichnet, dass die Perforation (26) von Langlochschlitzen gebildet ist.

8. Kunststoffdübel nach Anspruch 6, dadurch gekennzeichnet, dass die Perforation (26) von durchgehenden Löchern kreisförmigen Querschnitts gebildet ist.

9. Kunststoffdübel nach Anspruch 6, dadurch gekennzeichnet, dass die Perforation (26) von nicht durchgehenden Einschnitten gebildet ist.

10. Kunststoffdübel nach einem der Ansprüche 1 bis 9, dadurch gekennzeichnet, dass das Schraubeneinsatzloch im Dübelfuss (5) einen kreuzförmigen Querschnitt besitzt.

11. Kunststoffdübel nach einem der Ansprüche 1 bis 10, dadurch gekennzeichnet, dass der Dübelfuss (5) aussen konisch ausgebildet und mit Rippen (24) versehen ist.

## Claims

1. A synthetic dowel, the wall of which is divided into folding and/or spreader segments (3, 11, 20) by longitudinal slots (2, 12) which extend between the closed dowel tail (1) and the closed dowel head (5), with the closed dowel head (5) forming a massive sleeve ring in which the inserted securing screw (28) cuts its own thread and thereby makes axial stressing of the dowel possible, characterized in that lines of weakening (10, 26) extending in the peripheral direction are moulded between the dowel head (5) and the dowel segments (3, 11, 20) and form a pivot hinge for the dowel segments.

2. A synthetic dowel in accordance with claim 1, characterized in that the lines of weakening (10, 26) are arranged directly above the closed ring of the dowel head (5) and in that the longitudinal slots (2, 12) open into these lines of weakening.

3. A synthetic dowel in accordance with claim 1, characterized in that the longitudinal slots (2, 12) which form the segments terminate a small distance before the lines of weakening (10, 26).

4. A synthetic dowel in accordance with one of claims 1 to 3, characterized in that the line of weakening forming the hinge is formed by a ring groove (10).

5. A synthetic dowel in accordance with claim 4, characterized in that the ring groove (10) extends at the inside and/or at the outside.

6. A synthetic dowel in accordance with one of claims 1 to 3, characterized in that the line of weakening is formed by a perforation (26).

7. A synthetic dowel in accordance with claim 6, characterized in that the perforation (26) is formed by elongate slots.

8. A synthetic dowel in accordance with claim 6, characterized in that the perforation (26) is formed by throughgoing holes of circular cross-section.

9. A synthetic dowel in accordance with claim 6, characterized in that the perforation (26) is formed by non-throughgoing recesses.

10. A synthetic dowel in accordance with one of claims 1 to 9, characterized in that the screw insert aperture in the domed head (5) has a cross-like cross-section.

11. A synthetic dowel in accordance with one of claims 1 to 10, characterized in that the domed head (5) is externally of conical shape and is provided with ribs (24).

## Revendications

1. Cheville en matière synthétique dont la paroi est divisée en segments déformables par flexion latérale et/ou en segments d'expansion (3, 11, 20) par des fentes longitudinales (2, 12), qui sont formées entre la partie de tête fermée (1) de la cheville et la partie de base fermée (5) de celle-ci, dont la partie de base fermée (5) forme un manchon annulaire plein dans lequel la vis de fixation (28) serrée se taille elle-même son taraudage et permet, de cette manière, un serrage de la cheville dans le sens axial, la cheville étant caractérisée en ce que, dans la zone de transition entre le manchon annulaire que forme sa partie de base (5) et les segments (3, 11, 20), il est formé des lignes d'affaiblissement (10, 26) qui suivent le sens de la périphérie de la cheville, lignes d'affaiblissement qui forment une articulation de pivotement pour les segments de la cheville.

2. Cheville en matière synthétique suivant la revendication 1, caractérisée en ce que les lignes d'affaiblissement précitées (10, 26) sont prévues immédiatement au-dessus du manchon annulaire fermé que forme la partie de base (5) de la cheville, et en ce que les fentes longitudinales (2, 12) débouchent sur ces lignes d'affaiblissement.

3. Cheville en matière synthétique suivant la revendication 1, caractérisée en ce que les fentes longitudinales (2, 12) qui délimitent les segments débouchent à faible distance à l'avant des lignes d'affaiblissement (10, 26).

4. Cheville en matière synthétique suivant l'une quelconque des revendications 1 à 3, caractérisée en ce que la ligne d'affaiblissement qui forme l'articulation est constituée par une rainure annulaire (10).

5. Cheville en matière synthétique suivant la revendication 4, caractérisée en ce que la rainure annulaire (10) est dirigée vers l'intérieur et/ou vers l'extérieur.

6. Cheville en matière synthétique suivant l'une quelconque des revendications 1 à 3, caractérisée en ce que la ligne d'affaiblissement est formée par une perforation (26).

7. Cheville en matière synthétique suivant la revendication 6, caractérisée en ce que la perforation (26) est constituée par des fentes sous forme de boutonnières.

8. Cheville en matière synthétique suivant la revendication 6, caractérisée en ce que la perforation (26) est constituée par des trous de section transversale circulaire percés de part en part.

9. Cheville en matière synthétique suivant la revendication 6, caractérisée en ce que la perforation (26) est formée par des entailles qui ne sont pas faites de part en part.

10. Cheville en matière synthétique suivant l'une quelconque des revendications 1 à 9, caractérisée en ce que le trou de pose de la vis présente, dans la partie de base (5) de la cheville, une section transversale en forme de croix.

11. Cheville en matière synthétique suivant l'une quelconque des revendications 1 à 10, caractérisée en ce que sa partie de base (5) est, extérieurement, de forme tronconique et présente des nervures (24).

Fig. 1

Fig. 2

Fig. 4

Fig. 5

Fig. 6

## Fig. 7

## Fig. 3

## Fig. 8